Europäisches Patentamt

**European Patent Office**

**Office européen des brevets**

(11) Publication number: **0 415 400 A1**

# EUROPEAN PATENT APPLICATION

(21) Application number: 90116620.7

(51) Int. Cl.⁵: **B65D 85/48**, G02B 21/34

(22) Date of filing: 30.08.90

(30) Priority: 01.09.89 US 402000

(43) Date of publication of application:
**06.03.91 Bulletin 91/10**

(84) Designated Contracting States:
**AT BE CH DE DK ES FR GB IT LI LU NL SE**

(71) Applicant: **GERHARD MENZEL GLASBEARBEITUNGSWERK GMBH & CO. KG**
**Saarbrückener Strasse 248**
**W-3300 Braunschweig(DE)**

(72) Inventor: **Webber,Peter James**
**Leverstock Green Farmhouse**
**Hemel Hempstead Hertfordshire HP3 8QE(GB)**
Inventor: **Webber,Philip Leslie John**
**Leverstock Green Farmhouse**
**Hemel Hempstead Hertfordshire HP3 8QE(GB)**

(74) Representative: **Gralfs, Harro, Dipl.-Ing.**
**Am Bürgerpark 8**
**W-3300 Braunschweig(DE)**

(54) **Container for microscope slides.**

(57) Container for at least one microscope slide comprising a flat base support (12) being open at the top with at least one retention well (16) for a microscope slide (40), which contains ramps (44) on which the microscope slide is placed at a distance from the bottom surface (22) of the base support. The ramps are arranged in such a way that the microscope slide in its longitudinal direction has a small inclination (α) towards the bottom surface of the base support. The cover (14) is preferably constructed as a slide cover being movable in longitudinal direction of the base support over both end walls of the base support. The cover is further provided at its bottom side with at least one projection (52) which limits the opening movement of the cover and engages the end walls (18) of the base support. Said projection is arranged in such a way that in both end positions of the cover which are limited by the projection different areas of the microscope slide are exposed. For microscope slides provided with a marking area (41) at one end in one opening position of the cover said marking area is exposed and the other opening position the retention area (43) of the microscope slide is exposed.

FIG.1

EP 0 415 400 A1

## CONTAINER FOR MICROSCOPE SLIDES

The present invention is directed to a container for microscope slides according to the preamble of the independent claim.

A known container of this kind (US-A-3 756 393) is provided with support ramps in the form of lands arranged on the bottom of the base support and extending transversely to the longitudinal extension of the retention wells and at a distance of the stop projections for the narrow sides of the microscope slides. The microscope slides are placed on said support ramps parallel to the bottom of the base support of the container. The cover is a slip-over cover being provided at its inner side with lands being arranged transversely to the longitudinal extension of said retention wells and above the support ramps in the base support when the cover is in its closed position.

Another known container (US-A-4 589 551) comprising individual retention wells for the microscope slides is provided with rounded protuberances on the bottom of the base support and at the inner side of the cover acting as supports for the microscope slides. In this case, the cover is constructed as a hinged cover being connected to the base support via a flexible hinge frame.

Object of the invention is a container in which the microscope slide is held in the base support in a simple way with a probe or sample placed on said microscope slide being safe from contacting the inner or lower surface of the cover.

According to the invention, a container as defined in the opening part of the independent claim is characterized by the means as stated in the characterizing part of the independet claim.

Appropriate embodiments of a container of this kind are the subject matter of the dependent claims.

In a preferred embodiment the base support is provided with a slide cover. Such a slide cover can be provided with a bar stop arranged at the bottom side of said cover and interacting with the inside of the end walls of said base support, over which the cover is slidable. If microscope slides with a marking area are used, a bar stop is arranged at the bottom side of said cover in such a way that in one end position of the cover the retention area of the microscope slide is exposed for applying the specimen, while in the other end position of the cover its marking area is exposed while its retention area is covered and thus protected against contact, dirtying and infection. At the same time, an improved handling of the microscope slides during the marking process and during the application of the specimen is achieved.

For being dispatched, the container can be provided with a mailing label with adhesive areas at both ends. In the preferred embodiment, said mailing label is glued with one end to the bottom of the base support. For being dispatched, the mailing label is put around the container and glued to it with the adhesive area at its free end. It is particularly suitable to provide a removable, data sheet at the inner side of the mailing label upon which the sender can write the data relating to the specimen. The analyzing institute can then complete the data sheet after the examination and analyzation of the specimen and then return the data sheet to the sender.

The invention is illustrated by way of example in the drawing in one embodiment and described in detail below with reference to the drawing.

Figure 1 is an exposed view of a container made in accordance with the present invention for holding and transporting mircoscope slides;

Figure 2 is a top plan view of the container of Figure 1 in the closed position partially broken away to illustrate a microscope slide placed therein;

Figure 3 is a front elevational view of the container of Figure 2;

Figure 4 is a cross-sectional view of container 2 taken along the line 4-4 of Figure 2;

Figure 5 is an end elevational view of the container of Figure 2;

Figure 6 is a cross-sectional view of the container of Figure 2 taken along line Figure 6-6;

Figure 7 is a cross-sectional view of the container of Figure 2 taken along line 7-7;

Figure 8 is a cross-sectional view of the container of Figure 2 taken along line 8-8;

Figure 9 is a cross-sectional view of the container of Figure 2 taken along line 9-9;

Figure 10 is a view similar to Figure 2 illustrating the cover in a first open position;

Figure 10a is a cross-sectional view of the container of Figure 10 taken along line 10a-10a;

Figure 11 is a view similar to Figure 2 showing the cover in a second open position, wherein the specimen is placed on the slide;

Figure 11a is a cross-sectional view of the container of Figure 11 taken along line 11a-11a;

Figure 12 is a top plan view of a mailing label design to be secured to and placed around the container of Figure 1;

Figure 13 is a back plan view of the label of Figure 12;

Figure 14 is a perspective view of the container of Figure 1 and label of Figures 12 & 13 secured thereto;

Figure 15 is a side elevational view of the container of Figure 14 with the label partially folded;
Figure 16 is a side elevational view of the container of Figure 15 with the mailing label fully folded;
Figure 17 is a top perspective view of the container and mailing label assembly made in accordance with the present invention;
Figure 18 is a perspective view of a modified base support made in accordance with the present invention; and
Figure 18a is a cross-sectional view of the base support of Figure 18 taken along lines 18a-18a.

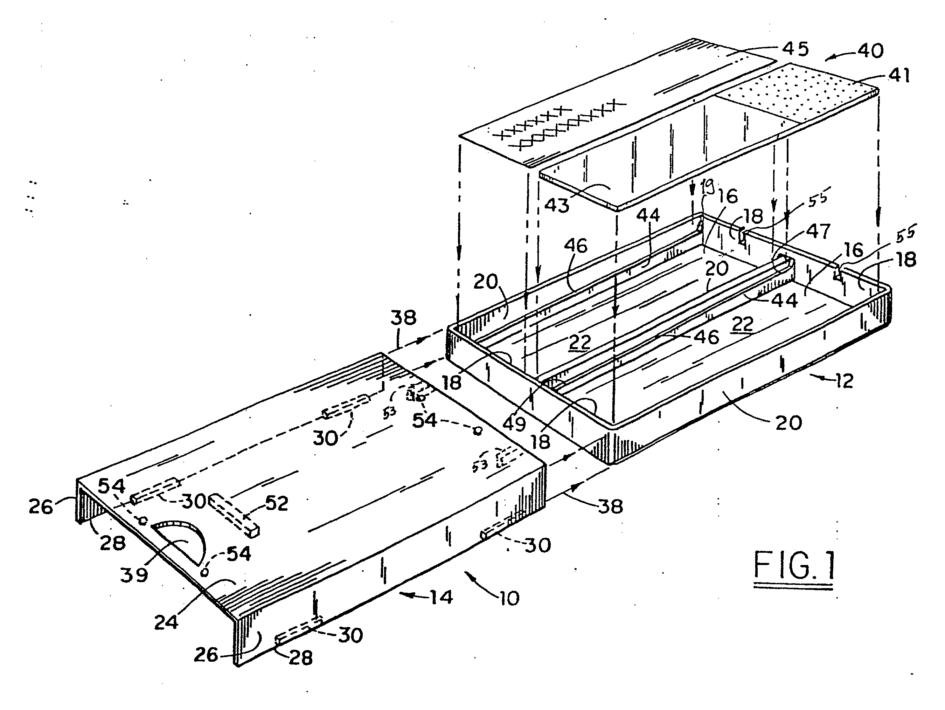

Referring to Figures 1-11, there is illustrated a container 10, made in accordance with the present invention which comprises the base support 12 and a cover 14. The base support 12 and cover 14 are preferably made of a plastic material and in the particular embodiment illustrated, base support 12 and cover 14 are molded out of polypropylene. However, it is to be understood that the base support 12 and cover 14 may be made of any other suitable plastic or other material.

The base support 12 is provided with two slide, retention wells 16. In the preferred embodiment, as illustrated, the slide retention wells 16 are formed as an integral part of the base support 12 during molding. Each slide retention well 16 includes a pair of end walls 18, a pair of side walls 20, and a bottom surface 22. The central side wall 20 belonging to both retention wells has a lower height than the two outer side walls.

The cover 14 comprises a generally cross-sectional U-shape. configuration having a top portion 24 designed to slide on base support 12. Cover 14 further includes a pair of oppositely disposed downwardly extending side walls 26 designed to be adjacent the outside surface of side walls 20 of base support 12. Sidewalls 26 each terminate in a rim 28 adjacent bottom surface 22. A pair of lugs 30 are provided adjacent each rim 28 and are designed such that when the cover 14 is placed on base support 12, the cover 14 snaps fit over base support 12. The lugs 30 are space axially apart so they provide stability of the cover 14 base support when the cover is in various open positions as is discussed later herein. The lugs 30 slide in a mating groove 29 formed along the length of bottom wall 22 of the adjacent slide retention well 16, allowing the cover to freely slide in the axial directions indicated by arrows 38. A finger tip recess 39 is provided at one end of the top portion 24 for receiving the tip of a finger to assist in sliding cover 24 along it's long axis.

The base support 12 is designed to receive a glass slide 40 placed in each slide retention well 16. The slide 40 is typical of slides available in the prior art. In the particular embodiment illustrated, slide 40 has a marking surface 41 disposed at one end. The marking surface 41 can be of any particular type that is conventional and found in slides of the prior art, for example, the mark surface may be etched, sand blasted, or provided by a layer of a resinous material. The remaining portion of the slide 40 comprises a specimen retention area 43 upon which a smear specimen is provided by the physician. The side walls 20 and end walls 18 of each slide retention well 16 are respectively sized such that a slide 40 can easily fit therein, leaving, only a small clearance between the slide 40 and adjacent walls.

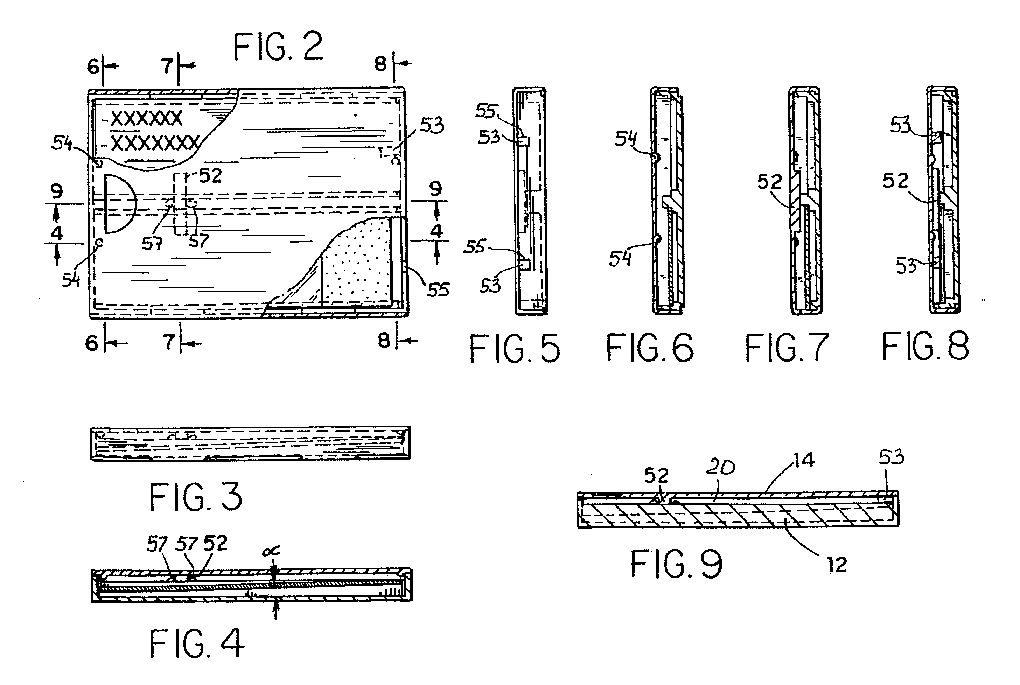

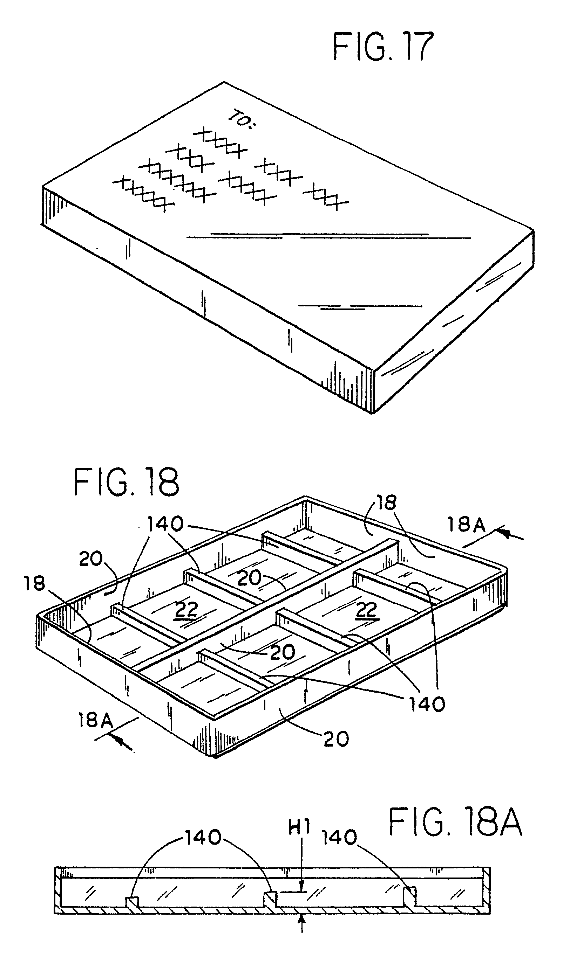

Means are provided in base support 12 for supporting the slide within the retention well 16 such that the slide is disposed at a small angle with regard to the top portion 24 of cover 14. In the particular embodiment illustrated this is provided by a pair of supporting ramps 44 integrally formed in each, side wall 20. Each ramp 44 has a top surface 46, upon which the glass slide 40 rests. As can be seen, top surface 46 is a substantially flat surface disposed at an angle α with respect to the bottom surface 22 (see Figure 4). In the preferred embodiment illustrated, the ramp 46 is continuous along the length of side walls 20, however, all that is necessary is that sufficient support is provided within the well 16 to maintain the slide 40 at this relatively low angle. Angle α may be any low angle desired, preferably from about $1°$-$6°$. In the particular embodiment, illustrated, α is about $2°$. In the preferred embodiment illustrated, the lower end 47 of ramp 46 is spaced from bottom wall 22 and the upper end 49 is spaced below the top edge of end wall 18 so that when a slide is placed therein, a small space is provided between the top of slide 40 and the bottom of cover 14. Various other configurations of ramp 46 may be selected as desired. Additionally, various other means for supporting slide 40 may be provided within the retention well 16 at angle α. For example, referring to Figures 18 and 18a, there is illustrated a modified base support 12 wherein alternate means for support slide 40 is provided. This embodiment is similar to that illustrated in Figure 1, like numerals indicating like parts, except in place of the ramps 44 there is provided a plurality of axially spaced support piers which progressively change in height H from one end to the other corresponding to the angle of inclination, while their surface is preferably sloping corresponding to the, angle of inclination. Ramps which do not extend under a right angle are also possible. The ramps can also extend between the end walls at an angle different from a right angle, for example, they can be arranged between these end walls in the form of an X or V.

Referring back to Figures 1-11, the slide retention well 16 closest to the front, is provided with a glass slide 40, however, the second receiving well 16, furthest from the viewer is provided with an advertising sheet 45 which can provide any desired appropriate identification or advertisement as desired. Alternatively, a second microscope slide can be placed in the second retention well 16. It is to be understood that any desired number of retention wells 16 may be provided in the base support 12.

The cover 14 is provided with means for allowing alternate access to either the marking portion 41 or the specimen retention area 45 of slide 40. In the particular embodiment illustrated, this is accomplished by providing a bar stop 52 integrally formed on the bottom surface of cover 14. Bar stop 52 has a height H sufficient such that it will stop against the inside surface of end wall 18 when the cover is slid in either axial direction. In the particular embodiment illustrated, height H is about 0.94 mm.' The bar stop 52 is arranged at the cover in such a way that two different opening positions of the cover are possible.

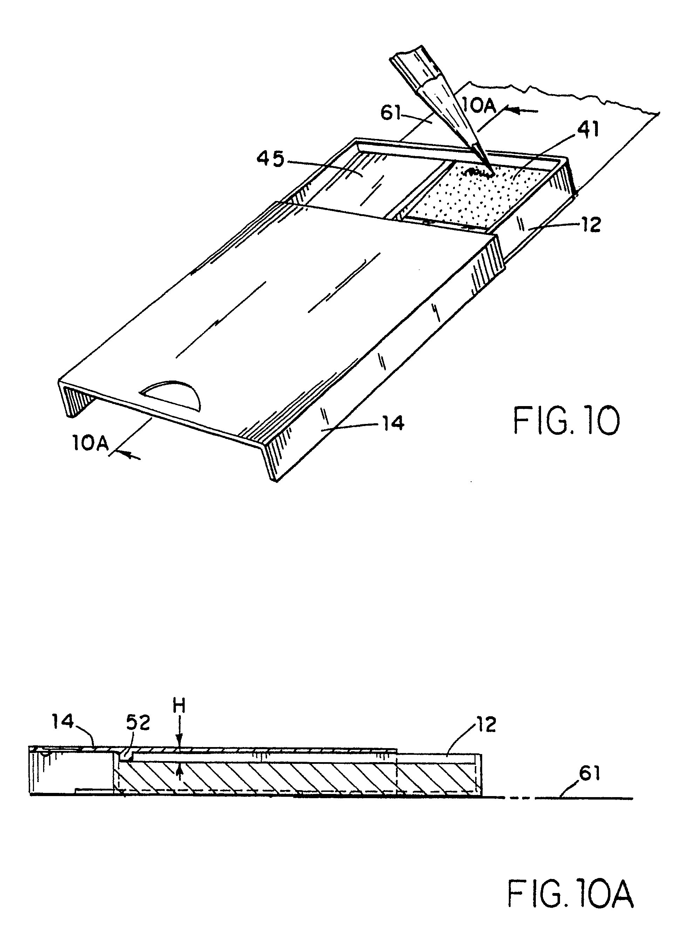

Referring to Figure 10, there is illustrated the cover 14 slid in its furthest left side position. Stop 52 prevents any further sliding of the cover 14 in the direction toward the left. The location of stop 52 is preferably located as illustrated so that substantially only the marking portion 41 of slide 40 is accessable when the cover is in this first open position. The cover 14 in this position, allows the physician to provide any appropriate information directly on the slide as desired. Additionally, since the cover is preventive from any further axial movement, there is substantially no chance that any inadvertent contact with the specimen support area 43.

The heigth H of the bar stop 52 is chosen in such a way that the cover is safely fixed in each end position by said bar stop striking against the inner side of the end wall. The height H can be, for example, 1 mm and is chosen in such a way that the bar stop lies with a small clearance parallel to the bottom 22 above the upper edge of the central side wall 20. The cover is therefore protected against deflection in the critical area where the specimen is placed on the micrisocope slide.

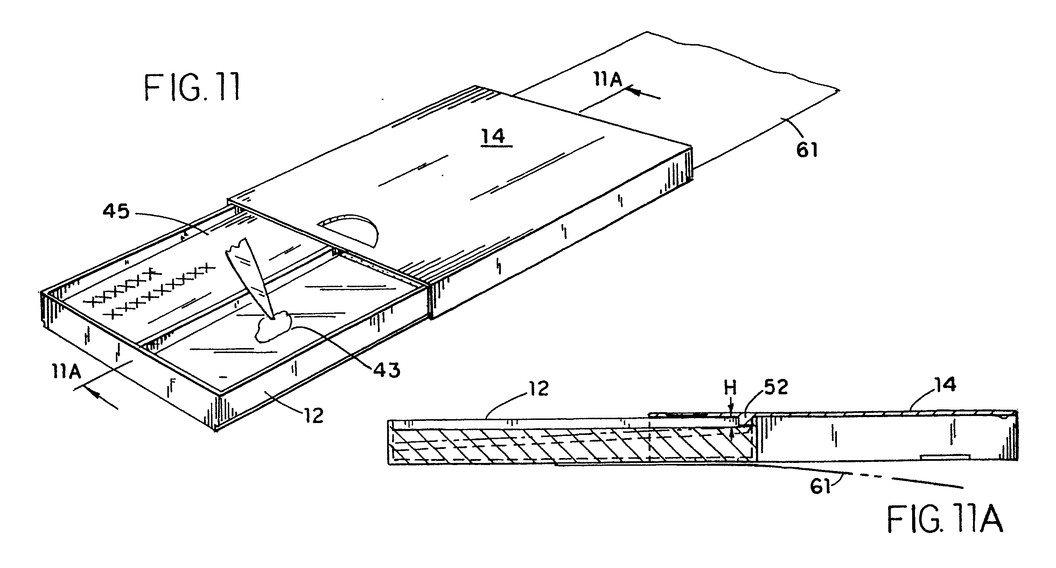

Referring to Figure 11, there is illustrated the cover 14 in the second open position which allows access to the specimen retention area 43. The cover 14 is simply slid to the right wherein until the bar stop 52 is adjacent end wall 18. When the cover is in this position, the physician simply places the appropriate specimen thereon as is customary in the art. Also, when the cover is in this position the bar stop 52 is preferably designed to press slightly against the top surface of slide 40. This prevents any unnecessary movement of the slide as the physician is applying the specimen to the slide 40. Additionally, as can be seen, there is substantially no chance of causing any inadvertent mark to the information placed on marking surface 41. In the preferred embodiment illustrated, the cover 14 is made out of a plastic material that is transparent or translucent material to allow the physician to view any information placed on the marking surface 41 as the specimen is smeared on to the specimen retention area 43.

When the physician is done, the cover 14 is slid into the closed position illustrated in Figure 7. In the preferred embodiment illustrated, top cover 14 is provided with a pair of projections 53 which extend toward base support 12, one projection being associated with each slide retention well 16 adjacent the end 18 of the slide 40 close to top cover 14. The projection is designed to pass through an axially aligned opening 55 in base support 12 having a mating configuration which allows projection 53 to easily pass therethrough leaving only a small clearance space therebetween. The projection 53 is designed to extend slightly past the end of slide 40 as illustrated in Figure 8. In embodiments illustrated, projection 53 extends about .25 inches (6.35 mm) along the length of slide 40 and has a width of about .125 inches (3.75 mm). It is to be understood that length and width may be varied as desired. The bottom surface of projection 53 is designed to be slightly above the slide 40 when in the closed position so as to minimize or prevent the slide from moving during transportation and contacting the cover 14. Since the slide is at a small angle, when the slide is slid in the first open position illustrated in Figure 10, projection 53 moves away from the top surface of slide 40. Aligned opening 55 allows the projection 53 to extend past end 18 when the cover 14 is placed in the second open position illustrated in Figure 11. Preferably, as illustrated, the outer end 59 of projection 53 is substantially flush with the outer surface of end wall 18 so as to minimize any potential contamination from entering the container.

The bar stops 52 can be provided with inclined surfaces at their bottom sides. If the height of the openings 55 is a little smaller than the height of the projections 53, these projections 53 can at the same time be used together with the projections 54 at the opposite end of the cover for fixing the cover.

At the raised end of the top surface 46 at the inner side of the adjacent end wall 18 there can be stops 19 holding the adjoining end of the mircoscope slide at a distance from the inner side of end wall 18. These projections can be constructed in such a way that the microscope slide is held in longitudinal direction without a clearance or under a certain initial tension. To take the microscope slide out of the container, a pin or the like can be inserted into the opening 55 below the microscope slide, so that the slide is raised and the tension is loosened in this way.

In order to protect the microscope slide in the area of its low end against being raised, there can be further small projections at the inner side of the end wall which overlap this end of the microscope slide and which are not illustrated in the drawing.

The bar stop 52, as illustrated in Figure 7 extends only a short distance across the width of slide 40. Bar stop 52 also serves to prevent the top of slide 40 from fully contacting the cover 14. The short length minimizes the potential contact of bar stop 52 with a specimen placed on the side. In the embodiment illustrated, bar stop 52 extends across slide 40 a distance of about .125 inches (3.75 mm). The cover 14 is also provided with projections 54 on the underside of top portion 22 which are designed to engage the inside of end walls 18 so as to provide a stop position when the cover 14 is slid along the base support 12. The height of projections 54 is such that it provides a stop point, but is sufficiently small such that it can be easily overcome by the simple further exertion of pressure along the direction indicated by arrow 38. In the embodiment illustrated, each projection 54 has a height of about .010 inches (.254 mm). In the preferred embodiment illustrated, additional projections 57 are integrally formed on the top of center side wall 20 and disposed adjacent both sides of bar stop 52. These projections 57 operate in a similar manner as projections 54. When the cover is in the closed position, projections 57 assist to maintain cover 14 in the closed position. However, only as relatively small force is necessary to move cover 14 over projections 57. In the embodiment illustrated, projections 57 have a height of about .010 inches (.254 mm), while in the preferred embodiment illustrated, projections 57 and 54 are used to maintain cover 14 in the closed position. Projections 57 or 54 may be omitted as desired.

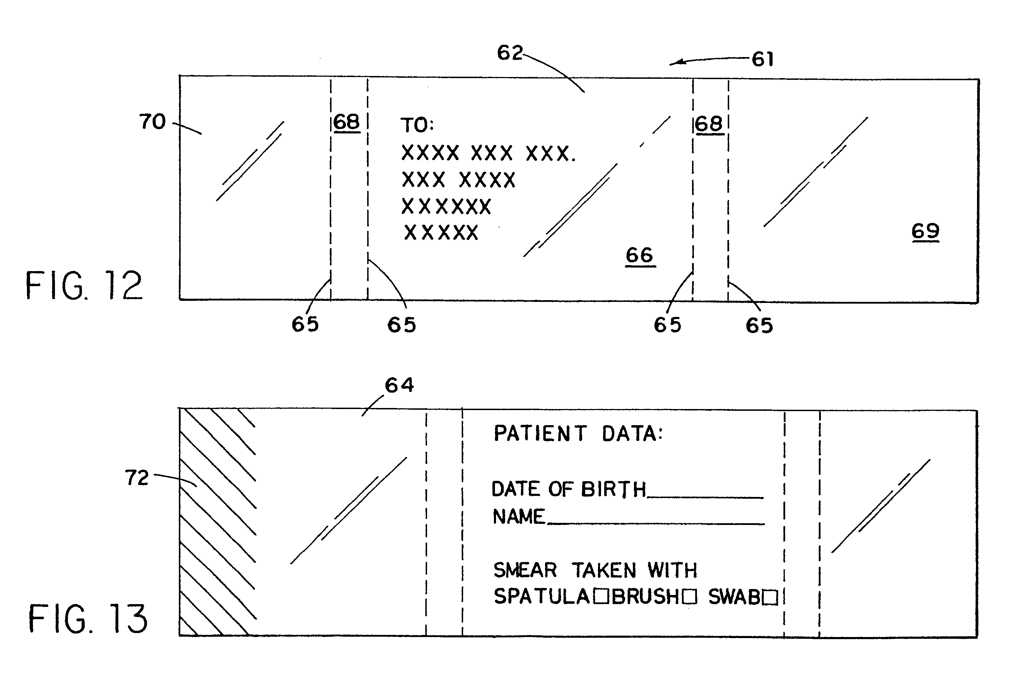

In a preferred embodiment, a mailing label 61 is provided for the container which is schematically illustrated in Fig. 10, 10a and 11, 11a. When the container is delivered, it is suitable to fix the mailing label at the bottom side of the base support, preferably by glueing it on in such a way that its free end extends in longitudinal direction of the container. At the free end of the mailing label, there is an adhesive area 72 which is indicated in Fig. 13 as the dashed area.

The total length of the mailing label is longer than the circumference of the container measured in the longitudinal direction of the container, so that the mailing label can be put over the end wall of the container, then over the top surface of the cover, then over the other end wall and then over the bottom of the base support where the end of the mailing label then more or less overlaps the fixed end. Here the adhesive area 72 mentioned above can be provided at the inner side of the mailing label which can be a self-adhesive area provided with a cover.

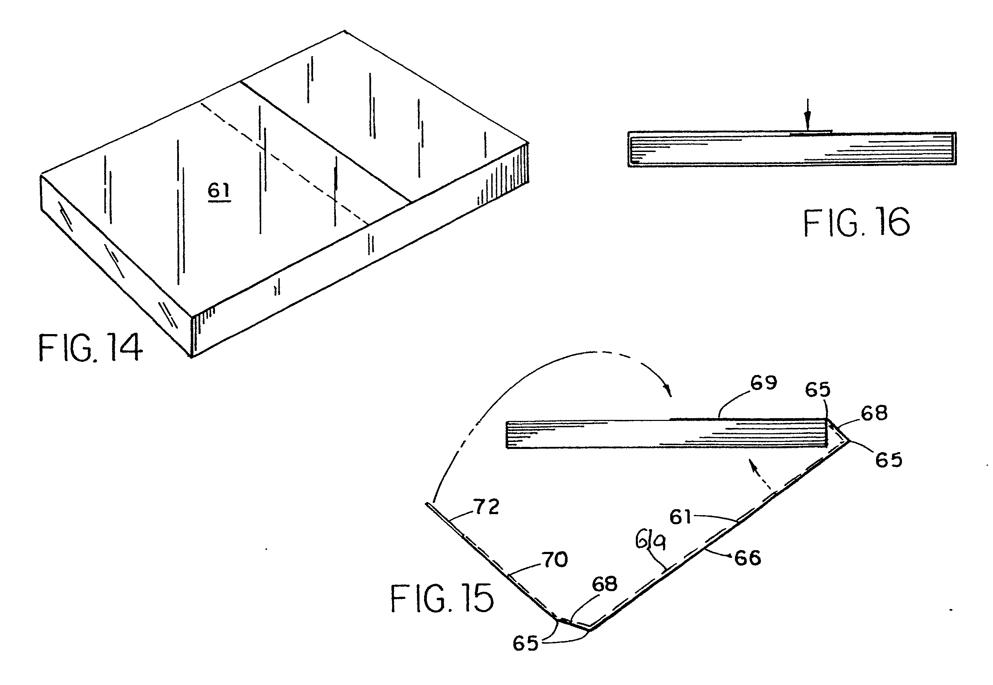

After the appropriate biological sample has been placed on slide 40, the cover 14 is then slid along the base portion 12 to its closed position as illustrated in Figure 2. Thereafter, a mailing label as illustrated in Figures 12 and 13 is wrapped about the cover, such as illustrated in Figures 14 and 15. The mailing label 61 is provided with a front and back side 62, 64. The mailing label 61 is provided with a plurality of fold lines 64 which form a central portion 66, a pair of end portions 68, and a pair of back portions 69, 70 respectively. The central portion 66 is designed to have a mailing address placed thereon. The end portion 68 are designed to be placed adjacent to ends 18 of base 12, and the back portion 69, 70 are designed to be folded about the container on the side opposite central portion 66 as illustrated in Figures 14 and 15 and are overlapped. The longer back portion 69 is placed against container 10. The side of back portion 69 adjacent container 10 may be provided with adhesive surface for securing the label 61 to the container 10. The back portion 70 is folded over into back portion 69 and is secured thereto in any convenient manner. In the embodiment illustrated, this is accomplished by an adhesive placed on the backside of back portion 70 identified as area 72 in Figure 13.

A illustrated in Figure 13, the back side 64 may be provided with pertinent patient data and/or the specimen taken. In the particular embodiment illustrated, such information may comprise the patient's name, the date of the sample, the type of sample, and the manner in which the sample was taken. However, it is to be understood that any pertinent data desired may be provided thereon.

In case of another embodiment, the mailing label is provided with a particular data sheet 61a which is illustrated schematically by the dashed line in Fig. 15. Said data sheet is removably fixed adhesively at the inner side of the mailing label and its marking area can extend, for example, over the areas 68 to the adhesive area 72 and can be connected to the cover of the adhesive area via a perforation.

The inclined position of the microscope slide inside the described container does not only serve to prevent a contact of the microscope slide and the specimen upon it with the cover. The inclined position is further helpful in order to properly apply a fixative which is normally used to cover the specimen. A typical fixative is, for example, a polyethylene-glycol compound. Because of the inclination, a surplus of fixative can flow to the lower end of the microscope slide where the surplus alcohole soon evaporates.

The container 10, slide 40, and mailing label 61 is designed to be provided to the physician in the form of a kit for various medical tests. For example, the container 10 will be initially provided with a slide 40 already placed in receiving well 16 and an appropriate mailing label 61 is secured to container 10. The physician, when he receives the kit, will have the slide already stored in a dust-free non-contaminating manner. When the physician wishes to obtain a specimen, he takes the container and label assembly, and unfolds the label. The physician then slides the cover 14 to the first position as illustrated in Figure 10. The physician then provides whatever appropriate information on the microscope slide as desired. For example, the type of test being conducted and perhaps a patient code. Thereafter, the cover 14 is slid to the second open position as illustrated in Figure 11 and the biological sample is placed directly on the slide while still in the container 10. This eliminates the need for the physician to specifically handle the microscope slide in order to place the specimen thereon, thus, minimizing the potential of obtaining dust, any grease from the hands of the physician onto the slide or even infecting germs which may interfere with the test results.

The placement of the slide at the small angle provided by ramps 44 assists in the placement of the specimen on the slide as opposed to placing a specimen on a normally flat slide placed on a normally flat surface. Additionally, the slanting of slide 40 is believed to assist in properly applying a fixative, typically, a polyethylene glycol mixture, to the specimen. The slant allows the fixative to coat the specimen retention area 45 and flow to the bottom, allowing any excess alcohol to quickly evaporate. Further, as is quite evident, the slide 40 can be easily manipulated within the container or package 10 to allow easy placement of the specimen thereon. The positive manner in which the cover 14 is held in the various stop positions, assists the user in placing the appropriate notation on the slide 40 and mailing label 61. Thereafter, the cover is then slid back into the closed position as illustrated in Figure 2. The appropriate mailing information is placed on the backside of the mailing label as appropriate and then folded about the container 10 and sealed. The container is then sent to the lab by mail or appropriate courier.

**Claims**

1. Container for at least one microscope slide comprising a flat base support (12) being open at the top with at least one retention well (16) for a microscope slide (40), which contains ramps (44) on which she microscope slide is placed at a distance from the bottom surface of the base support and in which the microscope slide is placed in longitudinal as well as transversal direction with a small clearance, comprising a cover (14) to close the open side of the retention well and being designed for engagement with the base support, so as to provide a fully enclosed container, comprising means to hold the microscope slide in such a way that its surface is protected against contacting the bottom side of the cover, characterized in that the ramps (44) are arranged in such a way that the microscope slide in its longitudinal direction has a small inclination ($\alpha$) towards the bottom surface (22) of the base support.

2. Container according to claim 1, characterized in that the cover (14) is constructed as a slide cover which is movable in longitudinal direction of the base support over both end walls of the base support.

3. Container according to claim 2, characterized in that the cover (14) is provided at its bottom side with at least one projection (52) which limits the opening movement of the slide and engages the end walls (18) of the base support and which is arranged in such a way that in both end positions of the cover which are limited by the projection different areas of the microscope slide are exposed.

4. Container according to claim 1 for microscope slides (40) provided with a marking area (41) at one end, characterized in that in one opening position of the cover the marking area (41) is exposed and in another opening position of the cover the retention area (43) of the microscope slide is exposed.

5. Container according to claim 1, characterized in that the ramps (44) are arranged at the inner sides of the side walls (20) of the base support (12) which adjoin the retention well (16).

6. Container according to claim 1, characterized in that a plurality of ramps (140) is provided at the bottom (22) of the base support (12), said ramps extending between the side walls (20) of the base support.

7. Container according to claim 2, characterized in that the cover (14) is provided at its longitudinal sides with side walls (26) extending over the side walls of the base support, said side walls (26) being provided with lugs (30) extending inwardly which interact with guideways at the outer sides of the side walls of the base support.

8. Container according to claim 1, characterized in that the angle of inclination ($\alpha$) is between 1 and 6°, preferably 2°.

9. Container according to claim 3 and 5, characterized in that the bar stop (52) is arranged at the bottom side of the cover in the area of the ramps (44) arranged in the base support (12).

10. Container according to claim 2, characterized in that the cover (14) is provided with arresting means (53; 54; 57) being effective in its closed position.

11. Container according to claim 10, characterized in that projections (54) for securing the cover in the closed position are arranged at the bottom side of the cover (14) at at least one end of the cover, said projectiong interacting with the side wall (18) of the base support (12).

12. Container according to claim 2, characterized in that the height of the side wall (20) which separates two adjoining retention wells (16) is lower than the height of the outer side walls (20) of the base support (12) and that the cover (14) is provided at its bottom side with at least one bar stop (52) limiting the opening movement of the cover, said bar stop interacting with the end walls (18) of the base support and being arranged above said side wall separating two retention wells.

13. Container according to claim 10 and 12, characterized in that at the upper side of a side wall (20) separating two retention wells (16) projections (57) are provided between which the bar stop (52) at the bottom side of the cover (14) engages in the closed position of the cover.

14. Container according to claim 2, characterized in that for each retention well there is a projection (53) being arranged at the bottom side of the cover (14) at that end of the cover which lies in the closed position of the cover at a small distance above the higher end (41) of the microscope slide.

15. Container according to claim 14, characterized in that the projections (53) are provided at their bottom side with sloped surfaces being directed opposite to the direction of movement (38) of the cover and that openings (55) for the projections (53) are provided in the adjoining end wall (18) of the base support (12).

16. Container according to claim 15, characterized in that the height of the openings (55) is a little smaller than the height of the projections (53) at the bottom side of the cover.

17. Container according to claim 1, characterized in that at the inner side of the end wall (18) of the base support (12) which adjoins the higher end of the microscope slide (40) there are projections (19) against which the end walls of the microscope slides lie at a distance of the inner side of said end wall.

18. Container according to claim 1, characterized in that at the inner side of the end wall (18) adjoining the lower end of the microscope slides there are projections which overlap the lower end of the microscope slides.

19. Container according to one of the preceding claims, characterized in that a mailing label (61) is provided which can be placed around the container, which is longer than the circumference of the container in its longitudinal extension and which is provided with an adhesive area (72) on one of its surfaces at its free ends.

20. Container according to claim 19, characterized in that the adhesive area (72) is a self-adhesive area being covered by a protection strip.

21. Container according to claim 19, characterized in that a data sheet (61a) is arranged removably on the surface of the mailing label (61) with the adhesive areas (72).

22. Container according to one of the claims 19 to 21, characterized in that the mailing label (61) is glued with one end to the outer side of the bottom (22) of the base support (12).

FIG.1

EP 0 415 400 A1

FIG. 2

XXXXXX
XXXXXXX

FIG. 5   FIG. 6   FIG. 7   FIG. 8

FIG. 3

FIG. 9

FIG. 4

EP 0 415 400 A1

FIG. 10

FIG. 10A

FIG.11

FIG.11A

FIG. 12

62

61

70

68

68

69

TO:

XXXX XXX XXX.
XXX XXXX
XXXXXX
XXXXX

66

65   65

65   65

FIG. 13

64

72

PATIENT DATA:

DATE OF BIRTH_____

NAME_____

SMEAR TAKEN WITH
SPATULA☐ BRUSH☐ SWAB☐

FIG.16

FIG.15

FIG.14

61

65
68
65
69
66
61
61a
68
65
70
72

61

13

# FIG. 17

# FIG. 18

# FIG. 18A

# EUROPEAN SEARCH REPORT

European Patent Office

EP 90116620.7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DE - A1 - 2 923 927 (ARTUSI) * Fig. 1-4 * | 1 | B 65 D 85/48 G 02 B 21/34 |
| A | GB - A - 810 479 (JORGENSEN) * Fig. 1-13 * | 1 | |
| D,A | US - A - 3 756 393 (MARKNITZ) * Totality * | 1 | |
| D,A | US - A - 4 589 551 (HELLON) * Totality * | 1 | |
| | | | TECHNICAL FIELDS SEARCHED (Int. Cl.5) |
| | | | B 65 D 1/00 B 65 D 6/00 B 65 D 85/00 G 02 B 21/00 |

The present search report has been drawn up for all claims

| Place of search | Date of completion of the search | Examiner |
|---|---|---|
| VIENNA | 22-11-1990 | MELZER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)